# EUROPÄISCHE PATENTSCHRIFT

(11) **EP 3 622 849 B1**
(45) Veröffentlichungstag und Bekanntmachung des Hinweises auf die Patenterteilung: **02.11.2022**
(21) Anmeldenummer: 18194891.0
(22) Anmeldetag: 17.09.2018
(51) Int. Cl.: A45F 3/08, H01M 50/20, A45F 3/04

(54) **RÜCKENTRAGVORRICHTUNG, INSBESONDERE FÜR EINEN AKKUPACK**
BACK-HELD CARRYING DEVICE, IN PARTICULAR FOR A BATTERY PACK
DISPOSITIF DE SUPPORT DU DOSSIER, EN PARTICULIER POUR UN BLOC-BATTERIE

(43) Veröffentlichungstag der Anmeldung: 18.03.2020
(73) Patentinhaber: Andreas Stihl AG & Co. KG, 71336 Waiblingen (DE)
(72) Erfinder: Nordmann, Alexander, 70437 Stuttgart (DE); Hermann, Markus, 70736 Fellbach (DE); Wagner, Daniel, 73650 Winterbach (DE); Zeller, Markus, 73527 Schwäbisch-Gmünd/ Herlikhofen (DE); Kolb, Joachim, 71638 Ludwigsburg (DE)
(74) Vertreter: Patentanwälte Ruff, Wilhelm, Beier, Dauster & Partner mbB

(56) Entgegenhaltungen:
- EP-A1- 0 887 005
- EP-A2- 3 106 565
- WO-A1-2009/157881
- WO-A1-2018/007111
- US-A- 5 732 867
- US-A- 5 954 250

## Beschreibung

Die Erfindung bezieht sich auf eine Rückentragvorrichtung mit einer Tragbasis und einer Traggurteinheit für die Tragbasis, wobei die Traggurteinheit eine Schultergurteinheit, eine Beckengurteinheit und eine Gelenkeinheit umfasst, welche die Beckengurteinheit gelenkig mit der Tragbasis verbindet. Die Tragbasis dient dazu, einen zu tragenden Gegenstand aufzunehmen, z.B. durch Befestigen des Gegenstands an der Tragbasis oder dadurch, dass der Gegenstand in einen Aufnahmeraum der Tragbasis eingebracht wird. Die Traggurteinheit dient dazu, dass ein Benutzer die Tragbasis mit dem an oder in ihr befindlichen Gegenstand auf dem Rücken tragen kann.

Die Rückentragvorrichtung kann insbesondere zum Tragen eines Akkupacks, insbesondere eines rückentragbaren Akkupacks zur elektrischen Energieversorgung handgeführter Elektrogeräte, insbesondere elektrisch angetriebener Garten- und/oder Forstbearbeitungsgeräte, ausgelegt sein. Unter handgeführten Elektrogeräten sind vorliegend vor allem Elektrogeräte zu verstehen, die handgetragen oder bodengeführt sind, insbesondere solche, die der Garten- und/oder Forstbearbeitung dienen, wie Motorsägen, Heckenscheren, Laubblasgeräte, Kehrgeräte, Rasenmäher und Vertikutierer, um nur stellvertretend einige Anwendungsbeispiele zu nennen. Der Akkupack ist dafür ausgelegt, mittels des Rückentragsystems vom Benutzer auf dem Rücken getragen zu werden und sorgt für die elektrische Energie, die das Elektrogerät im Gebrauch benötigt, wozu er geeignete Akkuzellen besitzt, worunter vorliegend beliebige herkömmliche Akkumulator- bzw. Batteriezellen zu verstehen sind. Typischerweise sind die Akkuzellen unter Bildung eines Akkuzellenblocks angeordnet.

In der Anwendung zum Tragen eines Akkupacks weist die Rückentragvorrichtung eine Haltevorrichtung zum lösbaren Halten des Akkupacks in einer Traglage an der Tragbasis auf. Für die Haltevorrichtung sind verschiedene Befestigungs- bzw. Haltemechanismen bekannt. Bei einem dieser bekannten Typen wird der Akkupack in einer translatorischen Annäherungsbewegung an die Tragbasis, die z.B. von einer plattenartigen Tragstruktur gebildet sein kann, angelegt und dann in einer zur Annäherungsbewegung senkrechten Verschiebebewegung, z.B. von oben nach unten, in die Traglage verbracht, siehe hierzu beispielsweise die parallelen Offenlegungsschriften US 2016/0345714 A1 und EP 3 106 565 A2, die Offenlegungsschrift WO 2018/007111 A1 sowie die Gebrauchsmusterschriften DE 20 2012 013 284 U1 und DE 20 2013 011 447 U1. Dabei wird vorliegend, soweit nichts anderes gesagt, bezüglich der Lageorientierung auf die Orientierung der Rückentragvorrichtung, wenn sie sich auf dem Rücken eines Benutzers befindet, bzw. die Orientierung des Akkupacks in seiner Traglage bei auf dem Rücken eines Benutzers befindlicher Rückentragvorrichtung Bezug genommen. Bei dem vorliegend betrachteten, alternativen Typ weist die Haltevorrichtung eine Andockeinrichtung an der Tragbasis zum schwenkbeweglichen Andocken des Akkupacks in einer Andocklage und eine Festhalteeinrichtung an der Tragbasis zum Festhalten des Akkupacks in der gegenüber der Andocklage zur Tragbasis hin eingeschwenkten Traglage auf.

Die Offenlegungsschrift EP 2 819 207 A1 offenbart eine derartige Haltevorrichtung, wobei dort die Andockeinrichtung von einer oberseitigen Randkante der Tragbasis gebildet ist, die von einer hakenförmigen Ausbildung eines oberseitigen Randes des Akkupacks derart übergriffen werden kann, dass eine gewissen Schwenkbeweglichkeit des Akkupacks gegenüber der Tragbasis mit der oberen Randkante der Tragbasis als Schwenkachse erhalten bleibt. Als Festhalteeinrichtung fungieren an der Tragbasis zwei in deren unterem Bereich seitlich angeordnete Rastvorsprünge, die mit korrespondierenden Gegenrastvorsprüngen im unteren Seitenbereich des Akkupacks unter Bildung einer ausrastbaren Schnappverbindung zusammenwirken, wobei ein Griff bei diesem Akkupack an dessen Unterseite angeordnet ist, d.h. an dessen in Traglage auf dem Rücken eines Benutzers unterer Seite.

Die Schultergurteinheit dient als Traghilfe für den Benutzer, und für entsprechende Anwendungen ist es zudem günstig, dass die Traggurteinheit die Beckengurteinheit und die Gelenkeinheit aufweist, welche die Beckengurteinheit gelenkig mit der Tragbasis verbindet. In der bereits erwähnten Gebrauchsmusterschrift DE 20 2013 011 447 U1 besteht die Gelenkeinheit aus einem Gelenk, über das ein Querträger um eine zu einer Ebene der plattenförmigen Tragbasis senkrechte, im Wesentlichen horizontale Schwenkachse schwenkbeweglich an die Tragbasis angekoppelt ist, wobei der Querträger als Befestigung für einen Beckengurt dient. Bei einer in der Offenlegungsschrift DE 10 2015 002 724 A1 offenbarten Rückentragvorrichtung besteht die Gelenkeinheit aus einem vorzugsweise durch ein Gewebe-/Filmscharnier gebildeten Gelenk, mit dem die Beckengurteinheit um eine zu einer Ebene der plattenförmigen Tragbasis parallele, im Wesentlichen horizontale Schwenkachse schwenkbeweglich mit der Tragbasis verbunden ist. Dies soll das Einklappen der Beckengurteinheit beim Abstellen der Rückentragvorrichtung ermöglichen und auf diese Weise eine Behinderung des aufrechten Abstellens der Rückentragvorrichtung durch die Beckengurteinheit vermeiden.

In der Patentschrift US 5.954.250 ist eine Rückentragvorrichtung der eingangs genannten Art nach dem Oberbegriff des Anspruchs 1 offenbart, bei der die Gelenkeinheit ein Doppelgelenk beinhaltet, mit dem ein erstes Gelenkteil um eine zur Tragbasis senkrechte erste Schwenkachse schwenkbeweglich an einer Platte der Beckengurteinheit gehalten ist und ein zweites Gelenkteil mittels eines Gelenkbolzens um eine durch dessen Längsachse definierte, zweite Schwenkachse senkrecht zur ersten Schwenkachse schwenkbeweglich am ersten Gelenkteil gehalten ist, wobei beide Schwenkachsen auf einer gleichen Höhe liegen und sich der Gelenkbolzen und damit die zweite Schwenkachse mit Abstand hinter der Platte der Beckengurteinheit befindet und wobei am zweiten Gelenkteil hinter dem Verbindungsbolzen die Tragbasis fixierbar ist.

Weiter sind Rückentragvorrichtungen bekannt, bei denen die Traggurteinheit mindestens eine lösbar mit der Tragbasis verbindbare Schultergurteinheit aufweist, was meist so ausgeführt ist, dass die Schultergurteinheit zwecks Höhenverschiebbarkeit der Tragbasis verstellt werden kann. Herkömmlich wird dies meist dadurch realisiert, dass für einen jeweiligen Schultergurt der Schultergurteinheit ein Gurtriemen verwendet wird, der in seiner Länge verstellt werden kann.

Der Erfindung liegt als technisches Problem die Bereitstellung einer Rückentragvorrichtung der eingangs genannten Art zugrunde, die gegenüber den oben erwähnten Rücktragvorrichtungen des Standes der Technik verbessert ist, insbesondere hinsichtlich der gelenkigen Verbindung der Beckengurteinheit mit der Tragbasis und bei Bedarf zusätzlich hinsichtlich der Art der Befestigung eines Akkupacks an der Tragbasis und/oder hinsichtlich der Verstellbarkeit der Schultergurteinheit.

Die Erfindung löst dieses Problem durch die Bereitstellung einer Rückentragvorrichtung mit den Merkmalen des Anspruchs 1. Vorteilhafte Weiterbildungen der Erfindung sind in den Unteransprüchen angegeben, deren Wortlaut hiermit durch Verweis zum Bestandteil der Beschreibung gemacht wird.

Erfindungsgemäß beinhaltet die Gelenkeinheit ein Doppelgelenk, durch das die Beckengurteinheit um zwei Schwenkachsen schwenkbeweglich mit der Tragbasis verbunden ist, wobei die eine der beiden Schwenkachsen im Wesentlichen parallel zu einer Plattenebene der Tragbasis und die andere Schwenkachse im Wesentlichen senkrecht zu der Plattenebene der Tragbasis verläuft und wobei die eine Schwenkachse im Wesentlichen zwischen und parallel zu zwei einander zugewandten Seitenkanten der Beckengurteinheit einerseits und der Tragbasis andererseits und die andere Schwenkachse gegenüber dieser Schwenkachse in von der Beckengurteinheit abgewandter Richtung versetzt verläuft.

Dies stellt eine sehr vorteilhafte Realisierung für eine um zwei Achsen schwenkbewegliche Anlenkung der Beckengurteinheit an die Tragbasis mit vorteilhafter Kinematik für die Schwenkbeweglichkeit der Beckengurteinheit relativ zur Tragbasis dar, ohne dass hierfür zwei einzelne Gelenkeinheiten benötigt werden und ohne dass sich zwei derartige Gelenke gegenseitig störend beeinflussen können. Durch dieses Doppelgelenk kann die Beckengurteinheit sowohl um die zur Tragbasis-Plattenebene im Wesentlichen parallele Schwenkachse als auch um die zur Tragbasis-Plattenebene im Wesentlichen senkrechte Schwenkachse in einem jeweils gewünschten Maß gegenüber der Tragbasis verschwenkt werden. Beide Schwenkbeweglichkeiten sind zur Bereitstellung entsprechender Ausweichbewegungen der Beckengurteinheit relativ zur Tragbasis von Vorteil.

In einer Weiterbildung der Erfindung ist die Gelenkeinheit und damit auch das Doppelgelenk durch ein eigenständiges Bauteil gebildet, das einerseits an der Beckengurteinheit und andererseits an der Tragbasis befestigt ist. Eine solche Gelenkeinheit lässt sich mit hoher Belastbarkeit und Lebensdauer fertigen und schränkt die Materialwahl für die Beckengurteinheit und die Tragbasis nicht ein.

In einer Weiterbildung der Erfindung ist die Schultergurteinheit lösbar mit der Tragbasis verbindbar und umfasst mindestens einen biegesteifen Gurthalter, der mittels eines Rastmechanismus in mehreren unterschiedlichen Höhen lösbar verrastend an der Tragbasis anbringbar ist, und mindestens einen mit diesem verbundenen flexiblen Gurtriemen. Die biegesteife Ausführung des Gurthalters ermöglicht eine sehr lagestabile Anbindung der Schultergurteinheit an die Tragbasis. Die Möglichkeit, den Gurthalter in mehreren unterschiedlichen Höhen lösbar verrastend an der Tragbasis anbringen zu können, stellt eine vorteilhafte Höheneinstellbarkeit für die Schultergurteinheit zur Verfügung. Die im Gegensatz zum Gurthalter flexible, nicht biegesteife Ausführung des Gurtriemens ermöglicht in üblicher Weise eine bequemes Tragen der Rückentragvorrichtung durch den Benutzer.

In Ausgestaltung der Erfindung stellt der Rastmechanismus mehrere Rastungen für den mindestens einen Gurthalter in den unterschiedlichen Höhen an der Tragbasis bereit, wobei die jeweilige Rastung eine Rastfreigabeposition und eine gegenüber der Rastfreigabeposition nach oben versetzte Rasthalteposition beinhaltet, zwischen denen der Gurthalter an der Tragbasis höhenverschiebbar ist. In der Rastfreigabeposition kann der Gurthalter in der gewünschten Höhe an die Tragbasis angesetzt bzw. von dieser abgenommen werden. In der Rasthalteposition ist der Gurthalter verrastend mit der Tragbasis verbunden, so dass er sich nicht von der Tragbasis lösen kann. Zum Lösen des Gurthalters von der Tragbasis ist der Gurthalter nach unten in die Rastfreigabeposition zu verschieben. Die nach oben versetzte Anordnung der Rasthalteposition gegenüber der Rastfreigabeposition hat den Vorteil, dass eine an der Tragbasis nach unten wirkende Gewichtskraft nicht dazu führen kann, dass sich der Gurthalter unbeabsichtigt in die Rastfreigabeposition verschiebt. Vielmehr wirkt diese Gewichtskraft der Tragbasis in Richtung eines sicheren Verbleibs des Gurthalters in der Rasthalteposition.

In einer Ausgestaltung der Erfindung weist der Rastmechanismus eine entriegelbare Rastverriegelung auf, die den Gurthalter in der jeweiligen Rasthalteposition verriegelt hält. Erst nach Entriegeln dieser Verriegelung durch den Benutzer kann der Gurthalter an der Tragbasis nach unten in die Rastfreigabeposition verschoben und dann von der Tragbasis abgenommen bzw. in einer anderen Höhe an dieser wieder angebracht werden. Dies stellt eine zusätzliche Sicherung für die höheneinstellbare Halterung des Gurthalters an der Tragbasis dar.

In einer Weiterbildung der Erfindung ist die Rückentragvorrichtung dafür eingerichtet, dass ein Benutzer mit ihr einen Akkupack zur elektrischen Energieversorgung handgeführter Elektrogeräte auf dem Rücken tragen kann, wobei es sich insbesondere um elektrische angetriebene Garten- und/oder Forstbearbeitungsgeräte handeln kann. Dazu beinhaltet die Rückentragvorrichtung eine Haltevorrichtung zum lösbaren Halten des Akkupacks in einer Traglage an der Tragbasis, wobei die Haltevorrichtung eine Andockeinrichtung an der Tragbasis zum schwenkbeweglichen Andocken des Akkupacks in einer Andocklage und eine Festhalteeinrichtung an der Tragbasis zum Festhalten des Akkupacks in der gegenüber der Andocklage zur Tragbasis hin eingeschwenkten Traglage umfasst. Charakteristischerweise ist die Andockeinrichtung an einem unteren Bereich der Tragbasis angeordnet.

Aufgrund dieser Merkmale der Rückentragvorrichtung lässt sich der Akkupack in sehr vorteilhafter Weise an die Rückentragvorrichtung ankoppeln. Dazu wird er unter Verwendung der Andockeinrichtung an den unteren Bereich der Tragbasis angedockt und kann dann zur Tragbasis hin zwecks Erreichen der Traglage eingeschwenkt werden. Wenn der Akkupack an seiner Oberseite mit einem Griff versehen ist, kann er am Griff gehalten werden, während er an den unteren Bereich der Tragbasis angedockt und dann zur Tragbasis hin in die Traglage eingeschwenkt wird.

Die Handhabung des Akkupacks beim Anbringen und Abnehmen an bzw. von der Rückentragvorrichtung kann auf diese Weise auf den oberen Bereich des Akkupacks und der Rückentragvorrichtung beschränkt werden, der Benutzer braucht nicht zwingend Handhabungsmaßnahmen am unteren Bereich des Akkupacks und der Rückentragvorrichtung vornehmen. Dies erleichtert dem Benutzer in der Regel die Handhabung, wenn er den Akkupack an der auf dem Boden oder einer Abstellfläche abgestellten Rückentragvorrichtung anbringen will. Zudem bleibt für ihn diejenige Seite der Tragbasis, an welcher der Akkupack anzubringen ist, nach dem Andocken des Akkupacks noch gut sichtbar, was ihm das Einschwenken in die Traglage erleichtern kann. Das Andocken des Akkupacks am unteren Bereich der Tragbasis ist auch aus Stabilitätsgründen von Vorteil, indem das mit dem Andocken des Akkupacks einhergehende Kippmoment für die Rückentragvorrichtung gering gehalten werden kann, insbesondere deutlich geringer als im Fall eines Andockens des Akkupacks an einem mittleren oder gar oberen Bereich der Tragbasis.

In einer Weiterbildung der Erfindung stellt die Andockeinrichtung eine zu einer Unterseite der Tragbasis im Wesentlichen parallele Schwenkachse für die Schwenkbewegung des Akkupacks in die Traglage bereit. Dies trägt weitergehend zur Optimierung der Handhabung des Akkupacks beim Montieren an und Demontieren von der Rückentragvorrichtung bei.

In einer Weiterbildung der Erfindung weist die Festhalteeinrichtung einen an der Tragbasis zwischen einer Freigabestellung und einer Festhaltestellung verschieblich angeordneten Festhalteschieber mit einem Festhaltehaken auf, der zum festhaltenden Hintergreifen eines korrespondierenden Festhaltegegenelements des Akkupacks in der Traglage ausgelegt ist. Dies stellt eine konstruktiv einfache und funktionell vorteilhafte Realisierung der Festhalteeinrichtung dar.

In einer alternativen Weiterbildung der Erfindung weist die Festhalteeinrichtung einen an der Tragbasis zwischen einer Freigabestellung und einer Festhaltestellung schwenkbeweglich angeordneten Festhaltehebel mit einem Festhaltebügel auf, der zum festhaltenden Hintergreifen eines korrespondierenden Festhaltegegenelements des Akkupacks in der Traglage ausgelegt ist. Auch dies stellt eine konstruktiv einfache, handhabungstechnisch günstige und funktionell zuverlässige Realisierung der Festhalteeinrichtung dar.

In einer Ausgestaltung der Erfindung befindet sich der Festhalteschieber bei nicht angedocktem Akkupack in der Festhaltestellung, wobei er eine Anlaufschräge aufweist, die dafür ausgelegt ist, durch Zusammenwirken mit dem Festhaltegegenelement des Akkupacks den Festhalteschieber beim Einschwenken des an die Tragbasis angedockten Akkupacks in Richtung Traglage selbsttätig in Richtung Freigabestellung zu verschieben. Mit dieser Maßnahme lässt sich der Festhalteschieber automatisch durch das Einschwenken des Akkupacks in dessen Traglage aus der Festhaltestellung herausbewegen, ohne dass er dazu vom Benutzer separat betätigt werden muss. Der Festhalteschieber kann in diesem Fall bevorzugt durch ein entsprechendes elastisches Vorspannelement in Richtung Festhaltestellung vorgespannt sein. Der Festhalteschieber wird dann beim Einschwenken des Akkupacks in seine Traglage gegen die Wirkung des Vorspannelements in die Freigabestellung verschoben, und sobald der Akkupack seine Traglage erreicht hat, kann das Vorspannelement den Festhalteschieber selbsttätig in seine Festhaltestellung zurückbringen.

In einer Ausgestaltung der Erfindung weist der Festhaltebügel eine bogenförmig mit nicht-konstantem Abstand von einer Schwenkachse des Festhaltehebels verlaufende Anlauffläche auf, gegen die das Festhaltegegenelement mit einem Abstand von der Schwenkachse anlegbar ist, der mit zunehmendem Verschwenken des Festhaltehebels in Richtung Festhaltestellung abnimmt. Dies erleichtert ein sicheres Einschwenken des Akkupacks in seine Traglage an der Tragbasis. Insbesondere ermöglicht diese spezielle Kinematik des Festhaltehebels einen optimalen Kraftverlauf der auf den Akkupack ausgeübten Einschwenkkraft bzw. Festhaltekraft.

In einer Ausgestaltung der Erfindung weist der Festhalteschieber oder der Festhaltehebel ein nutzerbetätigtes Bedienelement auf, das sich an einer von einer Akkupack-Ankoppelseite der Tragbasis abgewandten Seite der Tragbasis befindet. Dies erleichtert die Handhabung für den Benutzer beim Verbringen des Akkupacks von seiner Andocklage in seine Traglage. Der Benutzer kann dazu den Festhalteschieber bzw. Festhaltehebel von derjenigen Seite der Tragbasis aus bedienen, die der Seite der Tragbasis zum Ankoppeln des Akkupacks abgewandt ist. Diese Bedienbetätigung wird daher durch den angedockten Akkupack nicht behindert.

In einer Weiterbildung der Erfindung weist die Haltevorrichtung eine Abstützfederanordnung auf, die eine elastische Abstützung mit einer in Ausschwenkrichtung wirkenden Federkraft für den Akkupack in Traglage bereitstellt. Dies trägt zu einem sicheren, spielfreien Halten des Akkupacks in seiner Traglage an der Tragbasis bei. Da die Federkraft der Abstützfederanordnung in Ausschwenkrichtung von der Tragbasis weg auf den Akkupack wirkt, kann die Abstützfederanordnung ein unerwünschtes stoßartiges Anschlagen des Akkupacks gegen starre Teile der Tragbasis verhindern. Zweckmäßigerweise dient eine Ausschwenksperre dazu, ein Ausschwenken des Akkupacks aufgrund der Federkraft der Abstützfederanordnung zu blockieren. Diese Ausschwenksperre kann gelöst werden, wenn der Benutzer den Akkupack von der Tragbasis abnehmen und ihn hierzu zunächst von seiner Traglage in seine Andocklage ausschwenken will. Vorzugsweise fungiert der Festhalteschieber bzw. der Festhaltehebel als derartige Ausschwenksperre, alternativ kann eine separate Ausschwenksperre vorgesehen sein.

In einem weiteren Aspekt stellt die Erfindung ein Geräteset zur Verfügung, das eine erfindungsgemäße Rückentragvorrichtung und einen an dieser befestigbaren, rückentragbaren Akkupack zur elektrischen Energieversorgung handgeführter Elektrogeräte umfasst, insbesondere elektrisch angetriebener Garten- und/oder Forstbearbeitungsgeräte. Der Akkupack kann insbesondere ein solcher sein, wie er der Offenlegungsschrift EP 3 624 212 A1 offenbart ist.

In einer Ausgestaltung der Erfindung umfasst das Geräteset zusätzlich ein von dem Akkupack mit elektrischer Energie versorgbares, handgeführtes Elektrogerät.

Vorteilhafte Ausführungsformen der Erfindung sind in den Zeichnungen dargestellt. Diese und weitere vorteilhafte Ausführungsformen der Erfindung werden nachfolgend detaillierter angegeben und beschrieben. Hierbei zeigen:
Fig. 1 eine perspektivische Frontansicht einer Rückentragvorrichtung,
Fig. 2 eine perspektivische Rückansicht der Rückentragvorrichtung,
Fig. 3 eine Detailansicht eines Bereichs III in Fig. 2,
Fig. 4 eine Längsschnittansicht einer Rückentragvorrichtung mit Festhaltehebel und eines in Andocklage angekoppelten Akkupacks,
Fig. 5 eine Detailansicht eines oberen Teils von Fig. 4,
Fig. 6 die Ansicht von Fig. 4 mit dem Akkupack in Traglage,
Fig. 7 die Ansicht von Fig. 5 mit dem Akkupack in Traglage,
Fig. 8 eine perspektivische Ausschnittansicht eines Verbindungsbereichs einer Beckengurteinheit und einer Schultergurteinheit einer Rückentragvorrichtung,
Fig. 9 eine Ansicht entsprechend Fig. 1 mit einem weggelassenen Gurtriemen,
Fig. 10 eine Ansicht entsprechend Fig. 9 mit weggelassenen Gurtriemen und teilweise weggelassener Beckengurteinheit,
Fig. 11 die Rückansicht der Rückentragvorrichtung von Fig. 10,
Fig. 12 eine Ansicht entsprechend Fig. 5 für eine Rückentragvorrichtung mit Festhalteschieber,
Fig. 13 eine perspektivische Rückansicht eines den Festhalteschieber umfassenden Bereichs der Rückentragvorrichtung von Fig. 12,
Fig. 14 eine schematische Schnittansicht des Bereichs von Fig. 13 mit dem Akkupack von Fig. 12 in Andocklage,
Fig. 15 die Ansicht von Fig. 14 mit dem Akkupack in Traglage und
Fig. 16 eine schematische Blockdiagrammdarstellung eines Gerätesets mit Rückentragvorrichtung, Akkupack und von letzterem gespeistem Elektrogerät.

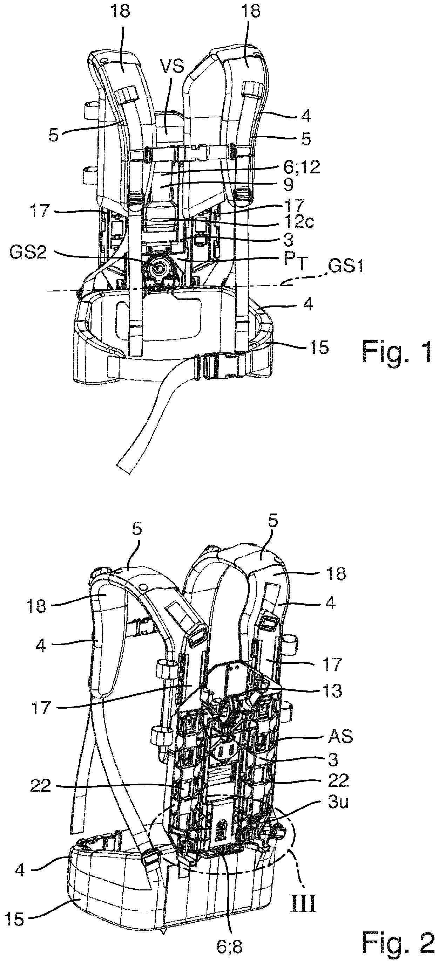

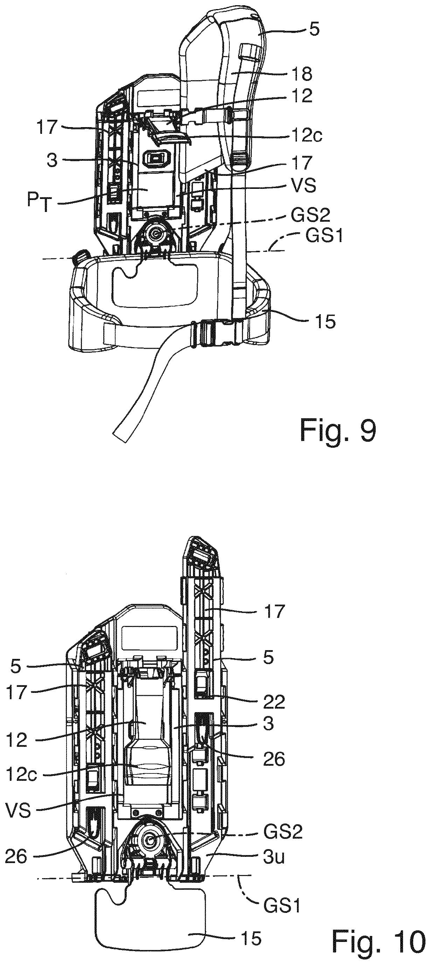

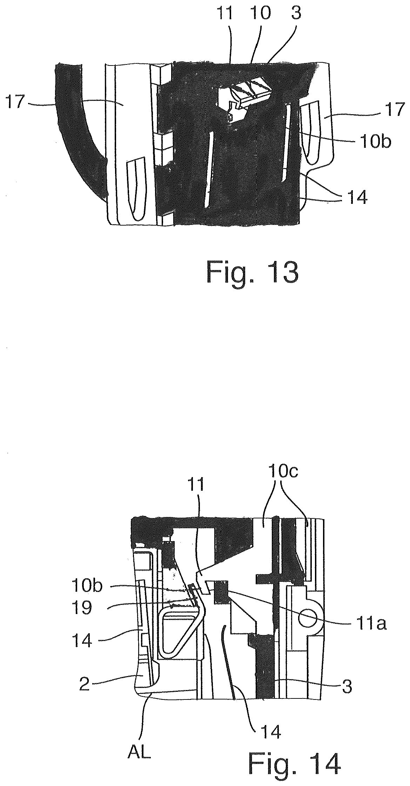

Eine in den Fig. 1 bis 15 in verschiedenen Darstellungen und Ausführungsvarianten veranschaulichte Rückentragvorrichtung ist zum Tragen beliebiger rückentragbarer Gegenstände auf dem Rücken eines Benutzers verwendbar. Dazu weist die Rückentragvorrichtung eine Tragbasis 3 auf, die dazu dient, den zu tragenden Gegenstand aufzunehmen, z.B. durch Befestigen des Gegenstands an der Tragbasis 3 oder dadurch, dass der Gegenstand in einen Aufnahmeraum der Tragbasis 3 analog wie im Fall eines üblichen Rucksacks eingebracht wird. In vorteilhaften Realisierungen besitzt die Tragbasis 3 eine plattenförmige Struktur, wie gezeigt. Alternativ kann sie eine beliebige andere Struktur haben, wie sie für dieses Funktionsbauteil von Rückentragvorrichtungen der vorliegend betrachteten Art dem Fachmann an sich bekannt sind, was hier keiner näheren Erläuterungen bedarf. Weiter beinhaltet die Rückentragvorrichtung eine Traggurteinheit 4 für die Tragbasis 3. Mit der Traggurteinheit 4 kann der Benutzer die Tragbasis 3 mit dem an oder in ihr befindlichen Gegenstand auf dem Rücken tragen.

In entsprechenden Ausführungen ist die Rückentragvorrichtung wie gezeigt zum Tragen eines Akkupacks 2 ausgelegt, bei dem es sich insbesondere um einen rückentragbaren Akkupack zur elektrischen Energieversorgung handgeführter Elektrogeräte, wie elektrisch angetriebener Garten- und/oder Forstbearbeitungsgeräte, handeln kann. Dazu weist die Rückentragvorrichtung in solchen Ausführungsformen eine Haltevorrichtung 6 zum lösbaren Halten des Akkupacks 2 in einer Traglage 7 an der Tragbasis 3 auf.

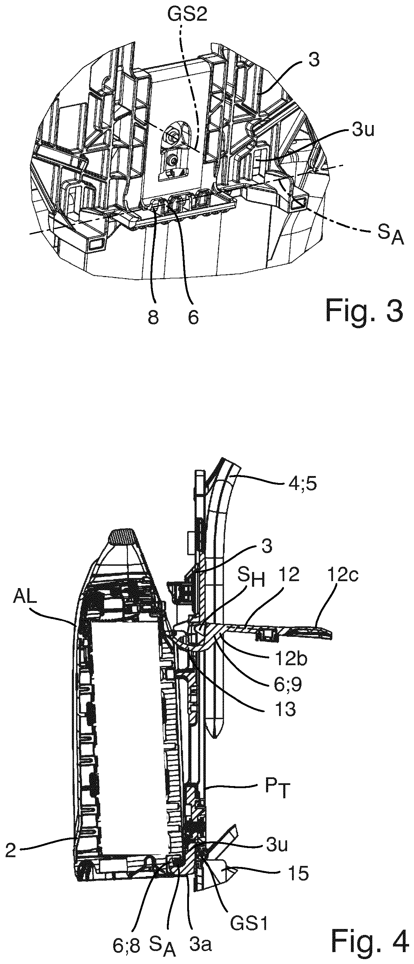

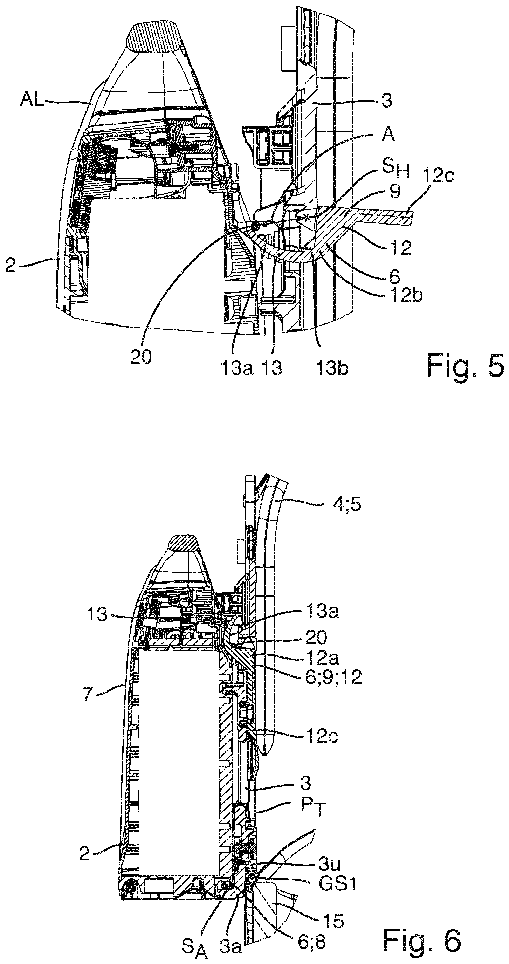

Die Haltevorrichtung 6 umfasst eine Andockeinrichtung 8 an der Tragbasis 3 zum schwenkbeweglichen Andocken des Akkupacks 2 in einer Andocklage AL, wie sie beispielsweise in den Fig. 4, 5 12 und 14 gezeigt ist, und eine Festhalteeinrichtung 9 an der Tragbasis 3 zum Festhalten des Akkupacks 2 in der gegenüber der Andocklage AL zur Tragbasis 3 hin eingeschwenkten Traglage 7, wie sie beispielsweise in den Fig. 6, 7 und 15 gezeigt ist. Die Andockeinrichtung 8 ist an einem unteren Bereich 3c der Tragbasis 3 angeordnet.

In entsprechenden Ausführungen stellt die Andockeinrichtung 8 eine zu einer Unterseite 3a der Tragbasis 3 im Wesentlichen parallele Schwenkachse S_{A} für die Schwenkbewegung des Akkupacks 2 in die Traglage 7 bereit, wie die beispielsweise in den Fig. 3, 4, 6 und 11 zu erkennen ist. In vorteilhaften Realisierungen befindet sich diese Schwenkachse S_{A} direkt an der Tragbasis-Unterseite 3a oder mit nur relativ geringem vertikalem Abstand über dieser.

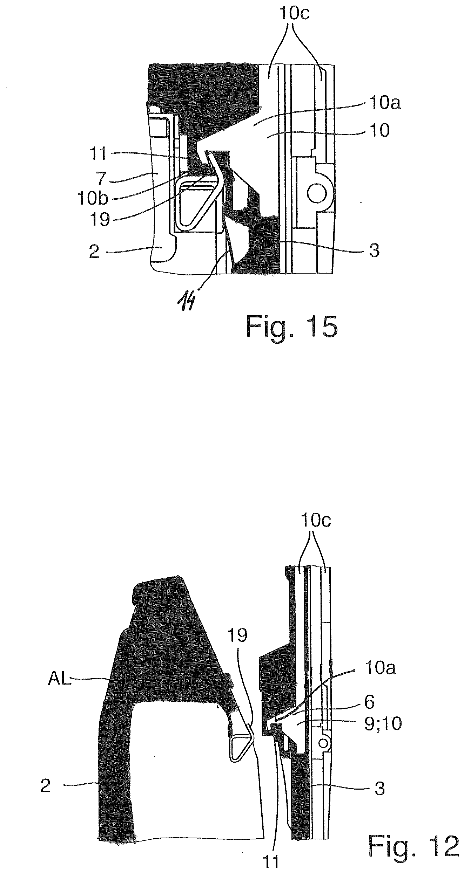

In einer entsprechenden Ausführungsform beinhaltet die Festhalteeinrichtung 9 einen an der Tragbasis 3 zwischen einer Freigabestellung und einer Festhaltestellung 10a verschieblich angeordneten Festhalteschieber 10 mit einem Festhaltehaken 11, der zum festhaltenden Hintergreifen eines korrespondierenden Festhaltegegenelements 19 des Akkupacks 2 in der Traglage 7 ausgelegt ist. Eine solche Realisierung ist in den Fig. 12 bis 15 veranschaulicht. Die nicht explizit gezeigte Freigabestellung befindet sich vertikal oberhalb der gezeigten Festhaltestellung 10a.

In entsprechenden Ausführungen befindet sich bei nicht angedocktem Akkupack 2 der Festhalteschieber 10 in der Festhaltestellung 10a, und der Festhalteschieber 10 weist eine Anlaufschräge 10b auf, die dafür ausgelegt ist, durch Zusammenwirken mit dem Festhaltegegenelement 19 des Akkupacks 2 den Festhalteschieber 10 beim Einschwenken des angedockten Akkupacks 2 in Richtung Traglage 7 selbsttätig in Richtung Freigabestellung zu verschieben. Optional ist ein nicht gezeigtes elastisches Vorspannelement an der Tragbasis 3 angeordnet, das den Festhalteschieber in Richtung seiner Festhaltestellung 10a vorspannt. Beim Einschwenken des Akkupacks 2 in seine Traglage 7 wird dann der Festhalteschieber 10 gegen die Wirkung des Vorspannelements von seiner Festhaltestellung 10a in seine Freigabestellung verschoben, so dass der Akkupack 2 vollständig in seine Traglage 7 eingeschwenkt werden kann, wonach das Vorspannelement den Festhalteschieber 10 selbsttätig in seine Festhaltestellung 10a zurückbringt.

In entsprechenden Realisierungen ist der Festhaltehaken 11 wie im Beispiel der Fig. 12 bis 15 mit einer Innenseite 11a schräg verlaufend gestaltet, so dass er nach Art eines Fanghakens das Festhaltegegenelement 19 des Akkupacks 2 gegen in Ausschwenkrichtung wirkende Kräfte sicher gefangen hält. Mit anderen Worten wirkt diese Fangschrägen-Innenseite 11a des Festhaltehakens 11 einem unbeabsichtigten Herausgleiten des Akkupacks 2 aus seiner Traglage 7 entgegen.

In einer alternativen Ausführung der Festhalteeinrichtung 9 weist diese einen an der Tragbasis 2 zwischen einer Freigabestellung 12b und einer Festhaltestellung 12a schwenkbeweglich angeordneten Festhaltehebel 12 mit einem Festhaltebügel 13 auf, der zum festhaltenden Hintergreifen eines korrespondierenden Festhaltegegenelements 20 des Akkupacks in der Traglage 7 ausgelegt ist. Eine derartige Realisierung der Festhalteeinrichtung 9 ist in den Fig. 1, 2, 3 bis 7 und 9 bis 11 zu erkennen.

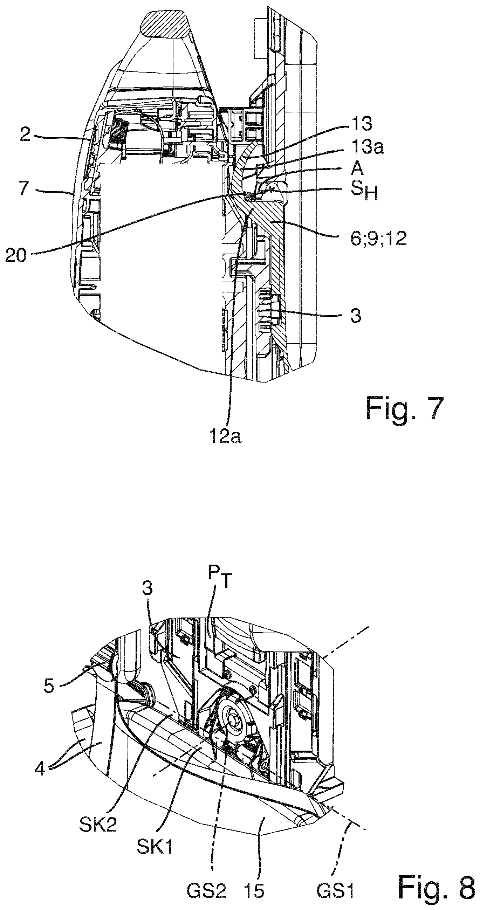

In entsprechenden Ausführungen weist der Festhaltebügel 13 wie gezeigt eine bogenförmig mit nicht-konstantem Abstand von einer Schwenkachse S_{H} des Festhaltehebels verlaufende Anlauffläche 13a auf. Das Festhaltegegenelement 20 des Akkupacks 2 liegt mit einem Abstand A von der Schwenkachse S_{H} des Festhaltehebels 12 gegen die Anlauffläche 13a des Festhaltebügels 13 an, wobei dieser Abstand A mit zunehmendem Verschwenken des Festhaltehebels 12 in Richtung Festhaltestellung 12a abnimmt. Dadurch ist dieser Abstand A in der Traglage 7 des Akkupacks 2 bzw. in der Festhaltestellung 12a des Festhaltehebels 12 minimal, wie in Fig. 7 gezeigt, während er demgegenüber in der Andocklage AL des Akkupacks 2 deutlich größer ist, in welcher sich der Akkupack 2 befindet, wenn sein Festhaltegegenelement 20 gerade in den Bereich des Festhaltehebels 12 bzw. von dessen Festhaltebügel 13 gelangt, wie in Fig. 5 gezeigt. Dies stellt eine vorteilhafte Kraftverlaufscharakteristik für die vom Festhaltehebel 12 auf den Akkupack 2 während des Einschwenkens von der Andocklage AL in die Traglage 7 ausgeübte Kraft dar.

Optional kann der Festhaltehebel 12 wie gezeigt an seinem festhalteseitigen Ende der Anlauffläche 13a mit einer Rastschulter 13b oder dergleichen versehen sein, um den Akkupack 2 zusätzlich in der Traglage 7 gegen unabsichtliches Ausschwenken zu sichern.

In entsprechenden Ausführungen weist der Festhalteschieber 10 oder der Festhaltehebel 12 ein nutzerbetätigtes Bedienelement 10c, 12c auf, das sich an einer von einer Akkupack-Ankoppelseite AS der Tragbasis 3 abgewandten Seite VS der Tragbasis 3 befindet. Die Ankoppelseite AS kann insbesondere eine dem Rücken des Benutzers abgewandte Rückseite der Tragbasis 3 sein, wobei dann die von der Ankoppelseite AS abgewandte Seite VS der Tragbasis 3 eine dem Rücken eines Benutzers beim Tragen der Rückentragvorrichtung zugewandte Vorderseite der Tragbasis 3 ist. Der Festhalteschieber 10 bzw. der Festhaltehebel 12 kann in diesem Fall vom Benutzer durch das Bedienelement 10c, 12c an der Vorderseite RS der Tragbasis 3 von der Festhaltestellung 10a, 12a in die Freigabestellung 12b bewegt werden, um ein Ausschwenken des Akkupacks 2 von seiner Traglage 7 in seine Andocklage AL und ein anschließendes Abnehmen des Akkupacks 2 von der Tragbasis 3 zu erlauben. In alternativen Ausführungen ist der Festhalteschieber 10 bzw. der Festhaltehebel 12 in anderer Weise vom Benutzer aus der Festhaltestellung 10a, 12a in die Freigabestellung 12b verlagerbar.

In entsprechenden Ausführungen weist die Haltevorrichtung 6 eine Abstützfederanordnung 14 auf, die eine elastische Abstützung mit einer in Ausschwenkrichtung wirkenden Federkraft für den Akkupack 2 in seiner Traglage 7 bereitstellt. Durch diese Abstützfederanordnung 14 kann der Akkupack 2 folglich federelastisch gegen die Tragbasis 2 anliegen, wenn er sich in seiner Traglage 7 befindet, so dass die Abstützfederanordnung 14 Stöße vom Akkupack 2 auf die Tragbasis 3 und umgekehrt absorbieren bzw. mindern kann. Zudem eignet sich die Abstützfederanordnung 14 dafür, den Akkupack 2 spielfrei in seiner Traglage 7 an der Tragbasis 2 zu halten. Die Abstützfederanordnung 14 kann beispielsweise eine Anordnung von einer oder mehreren an der Tragbasis 3 angeordneten Blattfedern beinhalten, wie in den Fig. 12 bis 15 zu erkennen. In alternativen Ausführungen kann die Abstützfederanordnung zusätzlich oder alternativ zu Blattfedern eine Anordnung von einem oder mehreren an der Tragbasis angeordneten Gummipuffern, insbesondere Rundgummipuffern, beinhalten.

In entsprechenden Ausführungsformen umfasst die Rückentragvorrichtung die Tragbasis 3 und die Traggurteinheit 4 in einer Realisierung, in der die Traggurteinheit 4 eine Schultergurteinheit 5, eine Beckengurteinheit 15 und eine Gelenkeinheit aufweist, welche die Beckengurteinheit 15 gelenkig mit der Tragbasis 3 verbindet. Die Gelenkeinheit beinhaltet ein Doppelgelenk 16, durch das die Beckengurteinheit 15 um zwei Schwenkachsen GS1, GS2 schwenkbeweglich mit der Tragbasis 3 verbunden ist, wie insbesondere aus den Fig. 1 und 8 bis 10 zu erkennen. Die Schwenkachse GS1 verläuft im Wesentlichen parallel zu einer Plattenebene P_{T} der Tragbasis 3, während die andere Schwenkachse GS2 im Wesentlichen senkrecht zu dieser Plattenebene P_{T} der Tragbasis 3 verläuft. Mittels dieses Doppelgelenks 16 kann somit die Beckengurteinheit 15 in jeweils gewünschtem Maß sowohl um die vorzugsweise horizontale Schwenkachse GS1 in Richtung Vorderseite RS bzw. Rückseite AS der Tragbasis 3 als auch um die vorzugsweise ebenfalls horizontale Schwenkachse GS2 lateral gegenüber der Tragbasis 3 verschwenkt werden. Vorzugsweise ist die Gelenkeinheit bzw. das Doppelgelenk 16 durch ein eigenständiges Bauteil gebildet, das einerseits an der Beckengurteinheit 15 und andererseits an der Tragbasis 3 befestigt ist, wie im gezeigten Ausführungsbeispiel.

In vorteilhaften Ausführungen verläuft die Schwenkachse GS1 im Wesentlichen zwischen und parallel zu zwei zueinander zugewandten Seitenkanten SK1, SK2 der Beckengurteinheit 15 einerseits und der Tragbasis 3 andererseits, wie insbesondere aus den Fig. 8 bis 11 ersichtlich, und die Schwenkachse GS2 verläuft gegenüber dieser Schwenkachse GS1 in von der Beckengurteinheit 15 abgewandter Richtung versetzt, im gezeigten Ausführungsbeispiel speziell nach oben versetzt. Dies ergibt eine für entsprechende Anwendungen optimale Bewegungskinematik für die Beckengurteinheit 15 gegenüber der Tragbasis 3. In entsprechenden Realisierungen bildet die Tragbasis 3 ein starres bzw. biegesteifes Bauteil, alternativ ist sie als biegeweiches Bauteil realisierbar.

In entsprechenden Ausführungsformen beinhaltet die Rückentragvorrichtung die Tragbasis 3 und die Traggurteinheit 4 in einer Realisierung, in der die Traggurteinheit mindestens eine Schultergurteinheit 5 aufweist, die lösbar mit der Tragbasis 3 verbindbar ist. Die Schultergurteinheit 5 umfasst in diesen Ausführungen mindestens einen biegesteifen Gurthalter 17, der mittels eines Rastmechanismus 22 in mehreren unterschiedlichen Höhen lösbar verrastend an der Tragbasis 3 anbringbar ist und mindestens einen mit dem Gurthalter 17 verbindbaren flexiblen Gurtriemen 18 umfasst. Der Gurthalter 17 stellt folglich in diesem Fall ein gegenüber dem flexiblen Gurtriemen 18 steifes, starres Bauteil dar. Die gezeigten Ausführungsbeispiele beinhalten diesen Typ von Schultergurteinheit 5, wie aus den entsprechenden Figuren ersichtlich. In entsprechenden Realisierungen beinhaltet die Schultergurteinheit 5 nur einen biegesteifen Gurthalter, an dem beispielsweise zwei flexible Gurtriemen zum Tragen durch den Benutzer angeordnet sein können, oder die Schultergurteinheit 5 beinhaltet wie gezeigt zwei biegesteife Gurthalter 17, mit dem jeweils ein flexibler Gurtriemen 18 oder ein gemeinsamer Gurtriemen verbindbar ist.

In vorteilhaften Ausführungen stellt der Rastmechanismus 22 mehrere Rastungen 23 für den mindestens einen Gurthalter 17 in unterschiedlichen Höhen an der Tragbasis 3 bereit. Die jeweilige Rastung 23 beinhaltet eine Rastfreigabeposition 24 und eine gegenüber der Rastfreigabeposition nach oben versetzte Rasthalteposition 25. Der Gurthalter 17 ist an der Tragbasis 2 jeweils zwischen der Rastfreigabeposition 24 und der Rasthalteposition 25 der gewählten Rastung 23 höhenverschiebbar. In der Rastfreigabeposition 24 kann der Gurthalter 17 in der gewünschten Höhe an die Tragbasis 3 angesetzt bzw. von dieser abgenommen werden. In der Rasthalteposition 25 ist der Gurthalter 17 verrastend mit der Tragbasis 3 verbunden und damit gegen ein Lösen von der Tragbasis 3 gesichert. Gelöst werden kann der Gurthalter 17 von der Tragbasis 3 nur dann, wenn er zuvor von der Rasthalteposition 25 in die Rastfreigabeposition 24 nach unten verschoben wird. Dies hat den Vorteil, dass das Gewicht der Tragbasis 3, das nach unten wirkt und daher versucht, die Tragbasis 3 relativ zu dem über die restliche Schultergurteinheit 5 vom Benutzer gehaltenen Gurthalter 17 nach unten zu verlagern, kein versehentliches Lösen des Gurthalters 17 von der Tragbasis 3 verursachen kann. Vielmehr wird der Gurthalter 17 durch das Gewicht der Tragbasis 3, zu dem auch das Gewicht eines daran gehaltenen oder von ihr aufgenommenen Gegenstands gehört, sicher in seiner Rasthalteposition 25 gehalten.

In vorteilhaften Ausführungen weist der Rastmechanismus 22 eine Rastverriegelung 26 auf, die den mindestens einen Gurthalter 17 in der jeweiligen Rasthalteposition 25 verriegelt hält. In der gezeigten Realisierung ist die Rastverrriegelung 26 durch einen Verriegelungsknopf gebildet, der vom Benutzer entriegelnd betätigt werden kann. Wenn der Benutzer die Verriegelung des Gurthalters 17 in seiner Rasthalteposition 25 lösen will, um den Gurthalter 17 von seiner Rasthalteposition 25 in seine Rastfreigabeposition 24 verbringen zu können, drückt er den Verriegelungsknopf.

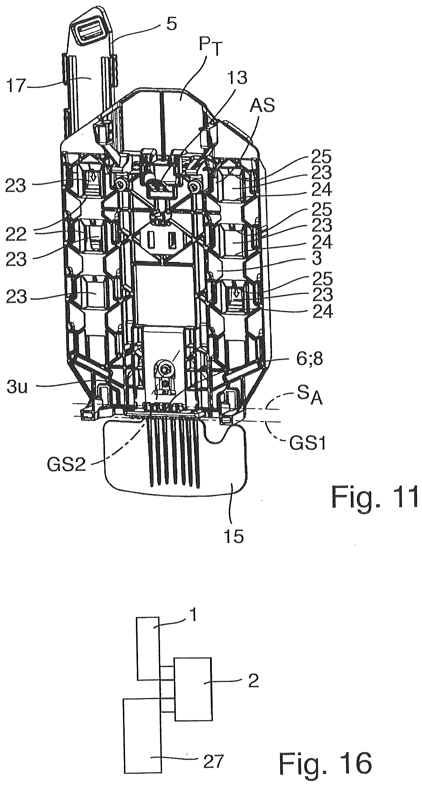

Fig. 16 veranschaulicht blockdiagrammatisch ein Geräteset mit einer Rückentragvorrichtung 1 und mit dem rückentragbaren, an ihr befestigbaren Akkupack 2. Optional umfasst das Geräteset zusätzlich ein vom Akkupack 2 mit elektrischer Energie versorgbares handgeführtes Elektrogerät 27, wie ein elektrisch angetriebenes Garten- und/oder Forstbearbeitungsgerät. Der Ackupack 2 kann in der geschilderten Weise an der Rückentragvorrichtung 1 lösbar angebracht werden. Das Elektrogerät 27 kann mittels einer flexiblen elektrischen Leitung oder alternativ durch eine direkte Steckverbindung elektrisch an den Akkupack 2 und/oder die Rückentragvorrichtung 1 angekoppelt sein. Des Weiteren kann das Elektrogerät 27 je nach Systemausführung mechanisch starr mit dem Akkupack 2 und/oder der Rückentragvorrichtung 1 gekoppelt sein.

Wie die gezeigten und die weiteren oben erwähnten Ausführungsbeispiele deutlich machen, stellt die Erfindung eine Rückentragvorrichtung mit vorteilhaften Funktionsmerkmalen hinsichtlich Gurthöhenverstellung, Anbindung der Beckengurteinheit an die Tragbasis und/oder Ankopplung eines rückentragbaren Akkupacks zur Verfügung. Die Rückentragvorrichtung ist insbesondere zum Tragen eines Akkupacks geeignet, sie ist jedoch je nach Ausführung alternativ oder zusätzlich auch zum Tragen anderer Gegenstände geeignet, die an der Tragbasis angebracht oder in z.B. in einem Behälter oder Beutel der Tragbasis aufgenommen sind.

## Patentansprüche

1. Rückentragvorrichtung mit
- einer Tragbasis (3) und
- einer Traggurteinheit (4) für die Tragbasis (3), wobei die Traggurteinheit (4) eine Schultergurteinheit (5), eine Beckengurteinheit (15) und eine Gelenkeinheit aufweist, welche die Beckengurteinheit (15) gelenkig mit der Tragbasis (3) verbindet und ein Doppelgelenk (16) beinhaltet, durch das die Beckengurteinheit (15) um zwei Schwenkachsen (GS1, GS2) schwenkbeweglich mit der Tragbasis (3) verbunden ist, wobei die eine (GS1) der beiden Schwenkachsen (GS1, GS2) im Wesentlichen parallel zu einer Plattenebene (P_{T}) der Tragbasis (3) und die andere Schwenkachse (GS2) im Wesentlichen senkrecht zu der Plattenebene (P_{T}) der Tragbasis (3) verläuft,
**dadurch gekennzeichnet, dass**
- die eine Schwenkachse (GS1) im Wesentlichen zwischen und parallel zu zwei einander zugewandten Seitenkanten (SK1, SK2) der Beckengurteinheit (15) und der Tragbasis (3) verläuft und die andere Schwenkachse (GS2) gegenüber dieser Schwenkachse (GS1) in von der Beckengurteinheit (15) abgewandter Richtung versetzt verläuft.

2. Rückentragvorrichtung nach Anspruch 1, weiter **dadurch gekennzeichnet, dass** die Gelenkeinheit durch ein eigenständiges Bauteil gebildet ist, das einerseits an der Beckengurteinheit (15) und andererseits an der Tragbasis (3) befestigt ist.

3. Rückentragvorrichtung nach Anspruch 1 oder 2, weiter **dadurch gekennzeichnet, dass** die Schultergurteinheit (5) lösbar mit der Tragbasis (3) verbindbar ist und mindestens einen biegesteifen Gurthalter (17), der mittels eines Rastmechanismus (22) in mehreren unterschiedlichen Höhen lösbar verrastend an der Tragbasis (3) anbringbar ist, und mindestens einen mit diesem verbundenen flexiblen Gurtriemen (18) umfasst.

4. Rückentragvorrichtung nach Anspruch 3, weiter **dadurch gekennzeichnet, dass** der Rastmechanismus mehrere Rastungen (23) für den mindestens einen Gurthalter (17) in unterschiedlichen Höhen an der Tragbasis (3) bereitstellt, wobei die jeweilige Rastung eine Rastfreigabeposition (24) und eine gegenüber der Rastfreigabeposition (24) nach oben versetzte Rasthalteposition (25) beinhaltet, zwischen denen der Gurthalter (17) an der Tragbasis (3) höhenverschiebbar ist.

5. Rückentragvorrichtung nach Anspruch 3 oder 4, weiter **dadurch gekennzeichnet, dass** der Rastmechanismus eine entriegelbare Rastverriegelung (26) aufweist, die den mindestens einen Gurthalter (17) in einer jeweiligen Rasthalteposition verriegelt hält.

6. Rückentragvorrichtung nach einem der Ansprüche 1 bis 5, weiter **dadurch gekennzeichnet, dass** sie zum Tragen eines rückentragbaren Akkupacks zur elektrischen Energieversorgung handgeführter Elektrogeräte, insbesondere elektrisch angetriebener Garten- und/oder Forstbearbeitungsgeräte, eingerichtet ist und eine Haltevorrichtung (6) zum lösbaren Halten des Akkupacks in einer Traglage (7) an der Tragbasis (3) umfasst, wobei die Haltevorrichtung (6) eine Andockeinrichtung (8) an der Tragbasis (3) zum schwenkbeweglichen Andocken des Akkupacks in einer Andocklage (AL) und eine Festhalteeinrichtung (9) an der Tragbasis (3) zum Festhalten des Akkupacks in der gegenüber der Andocklage (AL) zur Tragbasis (3) hin eingeschwenkten Traglage (7) umfasst und wobei die Andockeinrichtung (8) an einem unteren Bereich (3u) der Tragbasis (3) angeordnet ist.

7. Rückentragvorrichtung nach Anspruch 6, weiter **dadurch gekennzeichnet, dass** die Andockeinrichtung (8) eine zu einer Unterseite (3a) der Tragbasis (3) im Wesentlichen parallele Schwenkachse (S_{A}) für die Schwenkbewegung des Akkupacks in die Traglage (7) bereitstellt.

8. Rückentragvorrichtung nach Anspruch 6 oder 7, weiter **dadurch gekennzeichnet, dass**
- die Festhalteeinrichtung (9) einen an der Tragbasis (3) zwischen einer Freigabestellung und einer Festhaltestellung (10a) verschieblich angeordneten Festhalteschieber (10) mit einem Festhaltehaken (11) aufweist, der zum festhaltenden Hintergreifen eines korrespondierenden Festhaltegegenelements des Akkupacks in der Traglage (7) ausgelegt ist, oder
- die Festhalteeinrichtung (9) einen an der Tragbasis (3) zwischen einer Freigabestellung (12b) und einer Festhaltestellung (12a) schwenkbeweglich angeordneten Festhaltehebel (12) mit einem Festhaltebügel (13) aufweist, der zum festhaltenden Hintergreifen eines korrespondierenden Festhaltegegenelements des Akkupacks in der Traglage (7) ausgelegt ist.

9. Rückentragvorrichtung nach Anspruch 8, weiter **dadurch gekennzeichnet, dass** sich bei nicht angedocktem Akkupack der Festhalteschieber (10) in der Festhaltestellung (10a) befindet und der Festhalteschieber (10) eine Anlaufschräge (10b) aufweist, die dafür ausgelegt ist, durch Zusammenwirken mit dem Festhaltegegenelement den Festhalteschieber (10) beim Einschwenken des angedockten Akkupacks in Richtung Traglage (7) selbsttätig in Richtung Freigabestellung (12b) zu verschieben.

10. Rückentragvorrichtung nach Anspruch 8, weiter **dadurch gekennzeichnet, dass** der Festhaltebügel (13) eine bogenförmig mit nicht-konstantem Abstand von einer Schwenkachse (S_{H}) des Festhaltehebels (12) verlaufende Anlauffläche (13a) aufweist, gegen die das Festhaltegegenelement mit einem Abstand (A) von der Schwenkachse (S_{A}) anlegbar ist, der mit zunehmendem Verschwenken des Festhaltehebels (12) in Richtung Festhaltestellung (10a) abnimmt.

11. Rückentragvorrichtung nach einem der Ansprüche 8 bis 10, weiter **dadurch gekennzeichnet, dass** der Festhalteschieber (10) oder der Festhaltehebel (12) ein nutzerbetätigtes Bedienelement (10c, 12c) aufweist, das sich an einer von einer Akkupack-Ankoppelseite (AS) der Tragbasis (3) abgewandten Seite (VS) der Tragbasis (3) befindet.

12. Rückentragvorrichtung nach einem der Ansprüche 6 bis 11, weiter **dadurch gekennzeichnet, dass** die Haltevorrichtung (6) eine Abstützfederanordnung (14) aufweist, die eine elastische Abstützung mit einer in Ausschwenkrichtung wirkenden Federkraft für den Akkupack in Traglage (7) bereitstellt.

13. Geräteset mit
- einer Rückentragvorrichtung (1) nach einem der Ansprüche 1 bis 12 und
- einem rückentragbaren, an der Rückentragvorrichtung befestigbaren Akkupack (2) zur elektrischen Energieversorgung handgeführter Elektrogeräte, insbesondere elektrisch angetriebener Garten- und Forstbearbeitungsgeräte.

14. Geräteset nach Anspruch 13 mit einem vom Akkupack mit elektrischer Energie versorgbaren handgeführten Elektrogerät (27), insbesondere einem elektrisch angetriebenen Garten- und/oder Forstbearbeitungsgerät.

## Claims

1. Harness, comprising
- a support base (3) and
- a support strap unit (4) for the support base (3), wherein the support strap unit (4) comprises a shoulder strap unit (5), a waist strap unit (15) and a joint unit which connects the waist strap unit (15) to the support base (3) in an articulated manner and which comprises a double joint (16) by which the waist strap unit (15) is connected to the support base (3) so as to be pivotable about two pivot axes (GS1, GS2), wherein one (GS1) of the two pivot axes (GS1, GS2) runs substantially parallel to a plate plane (P_{T}) of the support base (3), and the other pivot axis (GS2) runs substantially perpendicularly with respect to the plate plane (P_{T}) of the support base (3),
**characterised in that**
- one pivot axis (GS1) runs substantially between and parallel to two mutually facing side edges (SK1, SK2) of the waist strap unit (15) and of the support base (3), and the other pivot axis (GS2) runs offset with respect to this pivot axis (GS1) in the direction away from the waist strap unit (15).

2. Harness according to Claim 1, further **characterized in that** the joint unit is formed by an autonomous component which is fastened on the one hand to the waist strap unit (15) and on the other hand to the support base (3).

3. Harness according to Claim 1 or 2, further **characterized in that** the shoulder strap unit (5) is releasably connectable to the support base (3) and comprises at least one flexurally stiff strap holder (17) which is configured, by means of a latch mechanism (22), to be releasably locked at several different heights on the support base (3), and at least one flexible strap web (18) connected to the strap holder (17).

4. Harness according to Claim 3, further **characterized in that** the latch mechanism provides several latches (23) for the at least one strap holder (17) at different heights on the support base (3), wherein the respective latch comprises a latch release position (24) and, upwardly offset in relation to the latch release position (24), a latch holding position (25), between which positions the strap holder (17) is vertically displaceable on the support base (3).

5. Harness according to Claim 3 or 4, further **characterized in that** the latch mechanism comprises a releasable snap-in lock (26), which holds the at least one strap holder (17) locked in a respective latch holding position.

6. Harness according to any one of Claims 1 to 5, further **characterized in that** it is configured to carry a battery pack to be worn on the back for supplying electrical energy to hand-held electrical tools, preferably electrically powered gardening and/or forestry tools, and comprises a holding device (6) for releasably holding the battery pack in a support position (7) on the support base (3), wherein the holding device comprises a docking mechanism (8) on the support base (3) for pivotably docking the battery pack in a docking position (AL), and a securing mechanism (9) on the support base (3) for securing the battery pack in the support position (7) pivoted in towards the support base (3) with respect to the docking position (AL), and wherein the docking mechanism (8) is arranged on a lower region (3u) of the support base (3).

7. Harness according to Claim 6, further **characterized in that** the docking mechanism (8) comprises a pivot axis (S_{A}), substantially parallel to an underside (3a) of the support base (3), for the pivoting movement of the battery pack into the support position (7).

8. Harness according to Claim 6 or 7, further **characterized in that**
- the securing mechanism (9) comprises a securing slide (10) which is arranged displaceably on the support base (3) between a release position and a securing position (10a) and comprises a securing hook (11), which is designed to engage securely behind a corresponding mating securing element of the battery pack in the support position (7), or
- the securing mechanism (9) comprises a securing lever (12) which is arranged pivotably on the support base (3) between a release position (12b) and a securing position (12a) and comprises a securing bow (13), which is designed to engage securely behind a corresponding mating securing element of the battery pack in the support position (7).

9. Harness according to Claim 8, further **characterized in that**, when the battery pack is not docked, the securing slide (10) is located in the securing position (10a), and the securing slide (10) comprises a run-on bevel (10b) which is designed, by interaction with the mating securing element, to displace the securing slide (10) automatically in the direction of the release position (12b) when the docked battery pack is pivoted inwards in the direction of the support position (7).

10. Harness according to Claim 8, further **characterized in that** the securing bow (13) comprises a run-on face (13a) extending in an arc shape with a non-constant spacing from a pivot axis (S_{H}) of the securing lever (12), against which run-on face (13a) the mating securing element can be placed with a spacing (A) from the pivot axis (S_{H}), which spacing (A) decreases with increasing pivoting of the securing lever (12) in the direction of the securing position (10a).

11. Harness according to any one of Claims 8 to 10, further **characterized in that** the securing slide (10) or the securing lever (12) comprises a user-actuated control element (10c, 12c) which is located on a side (VS) of the support base (3) directed away from a battery pack coupling side (AS) of the support base (3).

12. Harness according to any one of Claims 6 to 11, further **characterized in that** the holding device (6) comprises a cushioning spring arrangement (14) which provides the battery pack, in the support position (7), with elastic cushioning with a resilience acting in the outward pivoting direction.

13. Tool kit, comprising
- a harness (1) according to any one of Claims 1 to 12, and
- a battery pack (2) configured to be worn on the back and to be secured to the harness and to supply electrical energy to hand-held electrical tools, preferably electrically powered gardening and forestry tools.

14. Tool kit according to Claim 13, comprising a hand-held electrical tool (27) configured to be supplied with electrical energy from the battery pack, preferably an electrically powered gardening and/or forestry tool.

## Revendications

1. Dispositif de portage sur le dos, ledit dispositif comportant
- une base de portage (3) et
- une unité formant sangle de portage (4) destinée à la base de portage (3), l'unité formant sangle de portage (4) comportant une unité formant sangle d'épaule (5), une unité formant sangle sous-abdominale (15) et une unité d'articulation qui relie l'unité formant sangle sous-abdominale (15) de manière articulée à la base de portage (3) et qui contient une double articulation (16) reliant l'unité formant sangle sous-abdominale (15) à la base de portage (3) de manière pivotante sur deux axes de pivotement (GS1, GS2), l'un (GS1) des deux axes de pivotement (GS1, GS2) s'étendant sensiblement parallèlement à un plan de plaque (P_{T}) de la base de portage (3) et l'autre axe de pivotement (GS2) s'étendant sensiblement perpendiculairement au plan de plaque (P_{T}) de la base de portage (3),
**caractérisé en ce que**
- un premier axe de pivotement (GS1) s'étend sensiblement entre deux bords latéraux (SK1, SK2), opposés l'un à l'autre, de l'unité formant sangle sous-abdominale (15) et de la base de portage (3) et parallèlement auxdits deux bords et l'autre axe de pivotement (GS2) s'étend de manière décalée dans la direction opposée à l'unité formant sangle sous-abdominale (15) par rapport audit axe de pivotement (GS1).

2. Dispositif de portage sur le dos selon la revendication 1, **caractérisé en outre en ce que** l'unité d'articulation est formée par un composant indépendant qui est fixé d'une part à l'unité formant sangle sous-abdominale (15) et d'autre part à la base de portage (3) .

3. Dispositif de portage sur le dos selon la revendication 1 ou 2, **caractérisé en outre en ce que** l'unité formant sangle d'épaule (5) peut être reliée de manière amovible à la base de portage (3) et comprend au moins un support de sangle rigide (17), qui peut être monté par encliquetage amovible sur la base de portage (3) à plusieurs hauteurs différentes au moyen d'un mécanisme d'encliquetage (22), et au moins une sangle souple (18) reliée audit support de sangle.

4. Dispositif de portage sur le dos selon la revendication 3, **caractérisé en outre en ce que** le mécanisme d'encliquetage fournit sur la base de portage (3) une pluralité de crans (23) destinés à l'au moins un support de sangle (17) à différentes hauteurs, le cran respectif comprenant une position de désencliquetage (24) et une position d'encliquetage (25) décalée vers le haut de la position de désencliquetage (24), positions entre lesquelles le support de sangle (17) sur la base de portage (3) peut coulisser en hauteur.

5. Dispositif de portage sur le dos selon la revendication 3 ou 4, **caractérisé en outre en ce que** le mécanisme d'encliquetage comporte un moyen de verrouillage d'encliquetage déverrouillable (26) qui maintient l'au moins un support de sangle (17) verrouillé dans une position d'encliquetage respective.

6. Dispositif de portage sur le dos selon l'une des revendications 1 à 5, **caractérisé en outre en ce qu'**il est conçu pour porter un bloc de batterie qui peut être porté sur le dos et qui est destiné à l'alimentation en énergie électrique d'appareils électriques portatifs, notamment d'appareils de jardinage et/ou de sylviculture à entraînement électrique, et un dispositif de retenue (6) destiné à maintenir de manière amovible le bloc de batterie dans une position de portage (7) sur la base de portage (3), le dispositif de retenue (6) comprenant sur la base de portage (3) un équipement d'accueil (8) destiné à accueillir de manière pivotante le bloc de batterie dans une position d'accueil (AL) et un équipement d'immobilisation (9) sur la base de portage (3) destiné à immobiliser le bloc de batterie dans la position de portage (7) pivotée vers la base de portage (3) par rapport à la position d'accueil (AL) et l'équipement d'accueil (8) étant disposé au niveau d'une zone inférieure (3u) de la base de portage (3).

7. Dispositif de portage sur le dos selon la revendication 6, **caractérisé en outre en ce que** l'équipement d'accueil (8) fournit un axe de pivotement (S_{A}) qui est sensiblement parallèle à une face inférieure (3a) de la base de portage (3) et qui est destiné au mouvement de pivotement du bloc de batterie jusque dans la position de portage (7).

8. Dispositif de portage sur le dos selon la revendication 6 ou 7, **caractérisé en outre en ce que**
- l'équipement d'immobilisation (9) comporte un coulisseau d'immobilisation (10) qui est disposé sur la base de portage (3) de manière coulissante entre une position de libération et une position d'immobilisation (10a) et qui est muni d'un crochet d'immobilisation (11) qui est conçu pour s'engager en vue de l'immobilisation en arrière d'un élément d'immobilisation homologue correspondant du bloc de batterie dans la position de portage (7), ou
- l'équipement d'immobilisation (9) comporte un levier d'immobilisation (12) qui est disposé de manière pivotante sur la base de portage (3) entre une position de libération (12b) et une position d'immobilisation (12a) et qui est muni d'un étrier d'immobilisation (13) qui est conçu pour s'engager en vue de l'immobilisation en arrière d'un élément d'immobilisation homologue correspondant du bloc de batteries dans la position de portage (7).

9. Dispositif de portage sur le dos selon la revendication 8, **caractérisé en outre en ce que**, en l'absence du bloc de batterie, le coulisseau d'immobilisation (10) est dans la position d'immobilisation (10a) et le coulisseau d'immobilisation (10) comporte un biseau d'approche (10b) qui est destiné à déplacer automatiquement le coulisseau d'immobilisation (10) en direction de la position de libération (12b) lorsque le bloc de batterie accueilli pivote en direction de la position de portage (7) par coopération avec l'élément d'immobilisation homologue.

10. Dispositif de portage sur le dos selon la revendication 8, **caractérisé en outre en ce que** l'étrier d'immobilisation (13) comporte une surface d'approche (13a) qui s'étend de manière incurvée à une distance non constante d'un axe de pivotement (S_{H}) du levier d'immobilisation (12) et contre laquelle l'élément d'immobilisation homologue peut venir en appui à une distance (A) de l'axe de pivotement (S_{A}) qui diminue à mesure que le pivotement du levier d'immobilisation (12) en direction de la position d'immobilisation (10a) augmente.

11. Dispositif de portage sur le dos selon l'une des revendications 8 à 10, **caractérisé en outre en ce que** le coulisseau d'immobilisation (10) ou le levier d'immobilisation (12) comporte un élément de commande (10c, 12c), actionné par l'utilisateur, qui est situé sur un côté (VS) de la base de portage (3) qui est opposé à un côté d'accueil de bloc- batterie (AS) de la base de portage (3).

12. Dispositif de portage sur le dos selon l'une des revendications 6 à 11, **caractérisé en outre en ce que** le dispositif de retenue (6) comporte un ensemble de ressorts de support (14) qui fournit dans la position de portage (7) un support élastique présentant une force de ressort qui agit dans la direction d'éloignement par pivotement du bloc de batterie.

13. Ensemble d'appareils comprenant
- un dispositif de portage sur le dos (1) selon l'une des revendications 6 à 12,
- un bloc de batterie (2) qui peut être porté sur le dos, qui peut être fixé au dispositif de portage sur le dos et qui est destiné à l'alimentation en énergie électrique d'appareils électriques portatifs, en particulier d'appareils de jardinage et de sylviculture à entraînement électrique.

14. Ensemble d'appareils selon la revendication 13 comprenant un appareil électrique portatif (27) qui peut être alimenté en énergie électrique par le bloc de batterie, notamment un appareil de jardinage et/ou de sylviculture à entraînement électrique.
